# EUROPÄISCHE PATENTSCHRIFT

(11) **EP 2 616 295 B1**
(45) Veröffentlichungstag und Bekanntmachung des Hinweises auf die Patenterteilung: **02.10.2019**
(21) Anmeldenummer: 11740600.9
(22) Anmeldetag: 19.07.2011
(51) Int. Cl.: B60T 8/36, B60T 13/14, B60T 17/04

(54) **HYDRAULIKBLOCK FÜR EINE HYDRAULISCHE MEHRKREIS-FAHRZEUGBREMSANLAGE**
HYDRAULIC BLOCK FOR A HYDRAULIC MULTI-CIRCUIT VEHICLE BRAKING SYSTEM
BLOC HYDRAULIQUE POUR UN SYSTÈME DE FREINAGE HYDRAULIQUE DE VÉHICULE À MOTEUR À CIRCUITS MULTIPLES

(30) Priorität: 16.09.2010 DE 102010040868
(43) Veröffentlichungstag der Anmeldung: 24.07.2013
(73) Patentinhaber: Robert Bosch GmbH, 70442 Stuttgart (DE)
(72) Erfinder: SCHLOTTER, Volkmar, 74182 Obersulm (DE); KUNZ, Michael, 71711 Steinheim an der Murr (DE); SCHMAUTZ, Oliver, 71720 Oberstenfeld (DE)
(86) Internationale Anmeldenummer: PCT/EP2011/062344
(87) Internationale Veröffentlichungsnummer: WO 2012/034741

(56) Entgegenhaltungen:
- DE-A1-102006 020 890
- DE-A1-102007 031 308
- DE-A1-102008 005 147
- DE-A1-102009 000 580

## Beschreibung

Die Erfindung betrifft einen Hydraulikblock für eine hydraulische Mehrkreis-Fahrzeugbremsanlage mit den Merkmalen des Oberbegriffs des Anspruchs 1.

### Stand der Technik

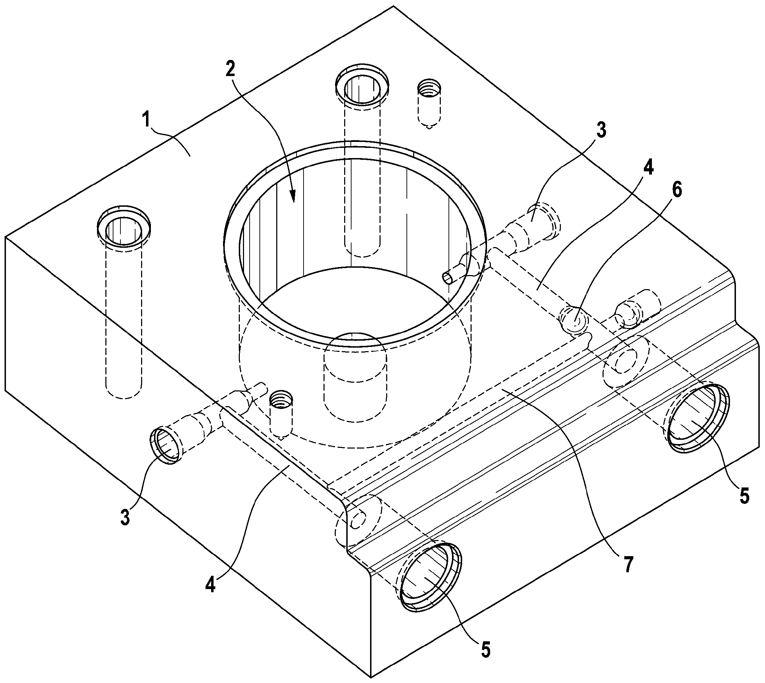

Ein Hydraulikblock nach den Merkmalen des Oberbegriffs des Anspruchs 1 ist beispielsweise offenbart in Figur 2 der DE 10 2006 020 890 A1. Dieser bekannte Hydraulikblock ist ausgelegt für eine Fahrzeugbremsanlage mit zwei Bremskreisen und ist mit zwei Einbauräumen für Hydrospeicher ausgestattet. Jedem der Bremskreise der Fahrzeugbremsanlage ist jeweils ein Einbauraum bzw. ein Hydrospeicher zugeordnet.

Derartige Hydraulikblöcke sind bei modernen hydraulischen Fahrzeugbremsanlagen mit einer Bremskraftregelung üblich. Die Bremskraft kann radindividuell, achsweise, für Gruppen von Fahrzeugrädern oder für alle bremsbaren Fahrzeugräder gemeinsam erfolgen. Beispiele für Bremskraftregelungen sind eine Bremsblockierschutzregelung (ABS), eine Antriebsschlupfregelung (ASR) und/oder eine Schleuderschutz- oder Fahrdynamikregelung (FDR, ESP). Auch elektrohydraulische Fahrzeugbremsanlagen weisen eine Bremskraftregelung auf. Elektrohydraulische Fahrzeugbremsanlagen sind Fremdkraftbremsanlagen, in denen ein hydraulischer Bremsdruck nicht per Muskelkraft sondern als Fremdenergie mit einer Hydropumpe aufgebaut wird. Auch in Hybridfahrzeugen oder Elektrofahrzeugen kann eine Bremskraftregelung zum sog. "Verblenden" erfolgen. Hybridfahrzeuge weisen einen Verbrennungsmotor und mindestens einen Elektromotor als Antriebsmotoren auf, wobei der Antrieb wahlweise mit dem Verbrennungsmotor, dem oder den Elektromotor/en oder gemeinsam mit dem Verbrennungs- und dem oder den Elektromotor/en erfolgen kann. Zur Rückgewinnung von Energie beim Bremsen des Fahrzeugs wird der Elektromotor als Generator betrieben und erzeugt Strom, der in einem Akkumulator gespeichert wird und zum Antrieb des Fahrzeugs mit dem Elektromotor zur Verfügung steht. Genau genommen handelt es sich um ein Wandeln kinetischer Energie des sich bewegenden Fahrzeugs in elektrische Energie, was als "Rekuperieren" bezeichnet wird. Damit ein Fahrzeugführer möglichst nichts merkt, wird durch eine Bremskraftregelung eine Bremskraft der Fahrzeugbremsanlage entsprechend einem Bremsmoment des Elektromotors im Generatorbetrieb verringert. Das wird als "Verblenden" bezeichnet. Es können verschiedene Bremskraftregelungen kombiniert werden.

Außer einem elektronischen Teil weisen derartige Bremskraftregelungen einen hydraulischen Teil mit üblicherweise einer Hydropumpe für jeden Bremskreis, Magnetventilen, Hydrospeichern, Rückschlagventile, Druckbegrenzungsventile auf. Die Aufzählung ist weder abschließend noch vollständig. Beispielsweise sind bei einer radindividuellen Bremskraftregelung jeder Radbremse ein Bremsdruckaufbauventil und ein Bremsdruckabsenkventil zugeordnet. Des Weiteren ist üblicherweise ein Hauptbremszylinder durch ein Trennventil je Bremskreis an die Fahrzeugbremsanlage angeschlossen, um ihn zum Absenken eines Bremsdrucks hydraulisch von der Fahrzeugbremsanlage trennen zu können. Um die Radbremsdrücke schnell absenken zu können, ist üblicherweise in jedem Bremskreis ein Hydrospeicher vorgesehen, an den bei radindividueller Bremskraftregelung durch je eines der Bremsdruckabsenkventile eine Radbremse hydraulisch angeschlossen ist.

Die hydraulischen Bauelemente solcher Fahrzeugbremsanlagen sind in einem Hydraulikblock untergebracht und durch diesen hydraulisch miteinander verschaltet. Der Hydraulikblock weist meist für jedes hydraulische Bauelement einen Einbauraum, meist in Form einer (gestuften) Bohrung auf, in den das Bauelement eingesetzt wird. Die hydraulische Verschaltung erfolgt üblicherweise durch Bohrungen im Hydraulikblock. Der Hydraulikblock als solches ist üblicherweise ein massives klotzförmiges Bauteil, das mit den Bohrungen versehen ist. Er ermöglicht einen kompakten und stabilen Aufbau des hydraulischen Teils der Bremskraftregelung einer hydraulischen Fahrzeugbremsanlage, wobei durch den Einbau der hydraulischen Bauelemente diese zugleich auch hydraulisch miteinander verschaltet werden, was ein separates hydraulisches Anschließen der einzelnen hydraulischen Bauelemente erübrigt.

### Offenbarung der Erfindung

Die Erfindung ist für eine hydraulische Mehrkreis-Fahrzeugbremsanlage mit einer Bremskraftregelung vorgesehen, die in mindestens einem Bremskreis keinen Hydrospeicher benötigt. Ein Beispiel einer solchen Fahrzeugbremsanlage offenbart die Offenlegungsschrift DE 10 2008 004 201 A1. Die Erfindung baut auf einem Hydraulikblock für eine hydraulische Mehrkreis-Fahrzeugbremsanlage auf, der mindestens zwei Einbauräume für Hydrospeicher aufweist. Beim erfindungsgemäßen Hydraulikblock mit den Merkmalen des Anspruchs 1 werden die mindestens zwei Einbauräume für Hydrospeicher einem der Bremskreise zugeordnet. Die Zuordnung erfolgt insbesondere durch ein entsprechendes Bohren des Hydraulikblocks, so dass die mindestens zwei Einbauräume mit einem Bremskreis kommunizieren. Die Erfindung ermöglicht, zwei oder mehr Hydrospeicher einem Bremskreis der Fahrzeugbremsanlage zuzuordnen, wenn in einem anderen Bremskreis ein Hydrospeicher entbehrlich ist. Denkbar ist auch, für den anderen Bremskreis einen externen Hydrospeicher vorzusehen. Vorteil der Erfindung ist, dass ein vorhandener Hydraulikblock verwendet werden kann und nur geringfügige Änderungen an der Verbohrung vorgenommen werden müssen. Die Position der Hydrospeicher im Hydraulikblock verändert sich nicht, es ist eine Verdoppelung des Volumens der Hydrospeicher eines Bremskreises möglich, ohne die Einbauräume für die Hydrospeicher im Hydraulikblock ändern, insbesondere ohne diese vergrößern zu müssen. Mechanische und hydraulische Anschlüsse des Hydraulikblocks bleiben unverändert, so dass eine Aufnahme des Hydraulikblocks im Kraftfahrzeug nicht geändert werden muss. Der Hydraulikblock bzw. die Fahrzeugbremsanlage lässt sich dadurch mit wenig Aufwand an Radbremsen mit großen Bremsflüssigkeitsvolumina anpassen, wie sie beispielsweise für Sonderschutzfahrzeuge oder in Leicht-Lkws Verwendung finden oder für Mehrkolben-Bremszangen.

Die mindestens zwei Einbauräume für Hydrospeicher können an verschiedenen Stellen des einen Bremskreises angeschlossen sein. Vorzugsweise kommunizieren die mindestens zwei Einbauräume miteinander, d. h. ihre Hydrospeicher sind hydraulisch parallel geschaltet. Sie sind beispielsweise zwischen den Bremsdruckabsenkventilen der Radbremsen und einer Saugseite der Hydropumpe eines Bremskreises angeschlossen. Für das Absenken der Radbremsdrücke der Radbremsen des einen Bremskreises stehen dadurch die Volumina der mindestens zwei Hydrospeicher zur Verfügung.

Die Unteransprüche haben vorteilhafte Ausgestaltungen und Weiterbildungen der im Anspruch 1 angegebenen Erfindung zum Gegenstand.

Gegenstand des Anspruchs 2 ist eine bestehende Verbindung eines Einbauraums für einen Hydrospeicher mit einem Bremskreis im Hydraulikblock zu verschließen. Das kann durch Einpressen einer Kugel, Eindrehen einer Schraube oder mit einem anderen geeigneten Verschlusskörper oder auch in anderer Weise erfolgen. Durch Verbohren des Hydraulikblocks oder auch in anderer Weise wird der eine Einbauraum für einen Hydrospeicher an einen anderen Bremskreis angeschlossen. Diese Ausgestaltung der Erfindung ermöglicht die Verwendung eines vorhandenen Hydraulikblocks mit sämtlichen vorgesehenen Bohrungen, wobei eine oder mehrere Bohrungen zusätzlich angebracht werden, jedoch keine Bohrung weggelassen werden muss.

### Kurze Beschreibung der Zeichnung

Die Erfindung wird nachfolgend anhand eines in der Zeichnung dargestellten Ausführungsbeispiels näher erläutert. Die Zeichnung zeigt in schematisierter und teilweise vereinfachter Darstellung einen Hydraulikblock gemäß der Erfindung in perspektivischer Darstellung.

### Ausführungsform der Erfindung

Der in der Zeichnung dargestellte Hydraulikblock 1 ist zur Aufnahme und hydraulischen Verschaltung nicht dargestellter hydraulischer Bauelemente einer Bremsdruckregelung einer hydraulischen Fahrzeugbremsanlage vorgesehen. Solche Bremsdruckregelungen sind an sich bekannt, sie werden beispielsweise zur Bremsblockierschutz-, Antriebsschlupf- und/oder Fahrdynamikregelung verwendet. Auch zur Bremskraftregelung elektrohydraulischer Fahrzeugbremsanlagen finden solche Hydraulikblöcke Verwendung. Ein weiteres Verwendungsgebiet ist die Bremskraftregelung beim sog. "Verblenden" in Fahrzeugbremsanlagen von Hybrid- oder Elektrofahrzeugen. Bei solchen Fahrzeugen wird beim Verzögern ein Elektro-Antriebsmotor als Generator betrieben, um kinetische Energie des Fahrzeugs in elektrische Energie zu wandeln, die in einem Akkumulator gespeichert wird und dadurch zum Antrieb des Fahrzeugs zur Verfügung steht. "Verblenden" bedeutet eine Verringerung der Bremskraft der Fahrzeugbremsanlage, um ein Bremsmoment zumindest teilweise auszugleichen, das der Elektro-Antriebsmotor im Generatorbetrieb erzeugt.

Der Hydraulikblock 1 ist ein quaderförmiges Bauteil aus Metall, das mit einer Vielzahl von Bohrungen verschiedener Größe versehen ist. Für eine Zweikreis-Fahrzeugbremsanlage ist der Hydraulikblock normalerweise symmetrisch. Die Bohrungen bilden Aufnahmen, in die die nicht dargestellten hydraulischen Bauelemente eingesetzt bzw. eingebaut werden, oder Verbindungsleitungen, die die hydraulischen Bauelemente miteinander verschalten. Hydraulische Bauelemente sind beispielsweise eine Hydropumpe, üblicherweise eine Kolbenpumpe, für jeden Bremskreis, Magnetventile, Rückschlagventile, Druckbegrenzungsventile, Hydrospeicher.

Der dargestellte Hydraulikblock 1 ist für eine Zweikreis-Fahrzeugbremsanlage vorgesehen. Er weist zentral in einer Flachseite eine zylindrische Bohrung 2 mit vergleichsweise großem Durchmesser auf, die zur Aufnahme eines nicht dargestellten Exzenters dient, der seinerseits zum Antrieb nicht dargestellter Kolbenpumpen dient. Diese Bohrung 2 wird nachfolgend als Exzenterraum 2 bezeichnet. Zum Antrieb des Exzenters dient ein nicht dargestellter Elektromotor, der auf der Flachseite des Hydraulikblocks 1 befestigt, beispielsweise angeschraubt wird.

Vom Exzenterraum 2 gehen radial gleichachsig gegenüber zwei durchmessergestufte Pumpenbohrungen 3 ab, die zum Einsetzen nicht dargestellter Kolbenpumpen vorgesehen sind. Es ist jede Kolbenpumpe einem Bremskreis zugeordnet. Radial von den Pumpenbohrungen 3 gehen gebohrte Verbindungsleitungen 4 ab, die in Einbauräume 5 zum Einbau nicht dargestellter Hydrospeicher münden. Die Einbauräume 5 sind ebenfalls als gestufte Bohrungen ausgeführt. Bei herkömmlichen Fahrzeugbremsanlagen ist jedem Bremskreis ein Hydrospeicher zugeordnet, der zwischen einer Saugseite der Hydropumpe und Bremsdruckabsenkventilen von Radbremsen angeschlossen ist. Die Einbauräume 5 des Hydraulikblocks 1 für die Hydrospeicher sind durch die Verbindungsleitungen 4 dementsprechend hydraulisch verschaltet. Im erfindungsgemäßen Hydraulikblock 1 ist die Verbindungsleitung 4 eines der beiden Hydrospeicher mit einer der beiden Kolbenpumpen durch eine eingepresste Kugel 6 verschlossen, der Einbauraum 5 für den einen Hydrospeicher ist also von diesem Bremskreis getrennt. Die Trennung ist auch in anderer Weise als mit einer Kugel möglich. Denkbar ist beispielsweise auch, die Verbindungsleitung 4, die den Einbauraum 5 für den einen Hydrospeicher mit der Pumpenbohrung 3 des einen Bremskreises verbindet, erst gar nicht im Hydraulikblock 1 anzubringen.

Eine zusätzliche Bohrung 7 verbindet die beiden Einbauräume 5 für die Hydrospeicher miteinander, so dass die nicht dargestellten Hydrospeicher, wenn sie in die Einbauräume 5 eingebaut sind, hydraulisch parallel geschaltet sind. Es sind dadurch beide Hydrospeicher an einen, nämlich den anderen Bremskreis angeschlossen. Sie kommunizieren mit einem der beiden Bremskreise. Auf diese Weise steht einem der beiden Bremskreise das Volumen beider Hydrospeicher zur Verfügung.

Verwendbar ist der Hydraulikblock 1 für hydraulische Fahrzeugbremsanlagen, bei denen nur ein Bremskreis einen Hydrospeicher benötigt oder auch für Einkreis-Fahrzeugbremsanlagen. Denkbar ist auch, für den anderen Bremskreis einen externen Hydrospeicher, also beispielsweise einen außen am Hydraulikblock 1 angebrachten oder anderweitig angeschlossenen Hydrospeicher vorzusehen (nicht dargestellt). Der Hydraulikblock 1 stellt einem der beiden Bremskreise das doppelte Bremsflüssigkeitsvolumen zur Verfügung. Dabei sind nur geringfügige Änderungen am Hydraulikblock 1 nötig, nämlich die zusätzliche Bohrung 7 und der Verschluss der einen Verbindungsleitung 4 oder eine anderweitige hydraulische Trennung des einen Einbauraums 5 für einen Hydrospeicher von dem einen Bremskreis. Sonstige Änderungen am Hydraulikblock 1 sind nicht notwendig, sein Einbau kann am üblichen Platz in einem Kraftwagen und mit einem vorhandenen Halter erfolgen.

## Patentansprüche

1. Hydraulikblock für eine hydraulische Mehrkreis-Fahrzeugbremsanlage, wobei der Hydraulikblock (1) mindestens zwei Einbauräume (5) für Hydrospeicher aufweist, **dadurch gekennzeichnet, dass** die mindestens zwei Einbauräume (5) miteinander und mit einem der Bremskreise kommunizieren.

2. Hydraulikblock nach Anspruch 1, **dadurch gekennzeichnet, dass** der Hydraulikblock (1) eine Verbindungsleitung (7) des einen Einbauraums (5) mit einem Bremskreis aufweist, die verschlossen ist, und dass die beiden Einbauräume (5) mit einem anderen Bremskreis kommunizieren.

## Claims

1. Hydraulic block for a hydraulic multi-circuit vehicle brake system, wherein the hydraulic block (1) has at least two installation spaces (5) for hydraulic reservoirs, **characterized in that** the at least two installation spaces (5) communicate with one another and with one of the brake circuits.

2. Hydraulic block according to Claim 1, **characterized in that** the hydraulic block (1) has a closed connection line (7) of the one installation space (5) connecting to one brake circuit, and **in that** the two installation spaces (5) communicate with another brake circuit.

## Revendications

1. Bloc hydraulique pour une installation hydraulique de frein de véhicule à plusieurs circuits, le bloc hydraulique (1) présentant au moins deux espaces d'installation (5) pour des accumulateurs hydrauliques, **caractérisé en ce que** les au moins deux espaces d'installation (5) communiquent ensemble et avec l'un des circuits de freinage.

2. Bloc hydraulique selon la revendication 1, **caractérisé en ce que** le bloc hydraulique (1) présente une conduite de connexion (7) de l'un des espaces d'installation (5) à un circuit de freinage, laquelle est fermée et **en ce que** les deux espaces d'installation (5) communiquent avec un autre circuit de freinage.
